# EUROPEAN PATENT APPLICATION

(11) **EP 2 963 935 A1**
(43) Date of publication of application: **06.01.2016**
(21) Application number: 15173152.8
(22) Date of filing: 22.06.2015
(51) Int. Cl.: H04N 21/422, H04N 21/462

(54) **Multi screen display controlled by a plurality of remote controls**

(30) Priority: 01.07.2014 KR 20140081669
(71) Applicant: Samsung Electronics Co., Ltd, Gyeonggi-do 443-742 (KR)
(72) Inventor: YUM, Duck-ki, Gyeonggi-do (KR)
(74) Representative: Appleyard Lees

(57) **Abstract**

A display apparatus and method are provided. The display apparatus includes a display configured to display a multi screen, a communicator configured to communicate with a plurality of external input apparatuses of different types, a storage configured to store information about the plurality of external input apparatuses respectively mapped with a plurality of types of content, and a processor configured to, in response to receiving a control signal from an external input apparatus, control an operation state of a screen of the multi screen corresponding to the received control signal, based on a type of content provided on a multi screen.

## Description

### BACKGROUND

### 1. Field

Apparatuses and methods consistent with the exemplary embodiments relate to a display apparatus and a controlling method thereof, and more particularly, to a display apparatus that provides a multi screen.

### 2. Description of Related Art

A variety of types of display apparatuses are being developed as a result of recent improvements in advanced electronic technology. In particular, a display apparatus such as a TV, PC, laptop computer, tablet PC, cell phone, MP3 player, and the like, has a distribution rate such that they may be used in most households.

In a recent effort to meet the needs of users who desire newer and more diverse features, display apparatuses with newer forms and features have been developed. For example, a Smart TV now has a multi screen feature which allows simultaneous viewing of different content such as simultaneous viewing of a TV broadcast and the Internet. The multi screen feature may include screens of multiple formats, bit rates, and resolutions for display on various devices.

However, it can be difficult to effectively control an image of different types and/or formats when they are provided through the multi screen feature.

### SUMMARY

An aspect of the exemplary embodiments relates to a display apparatus which may effectively control an image of different types provided through a multi screen feature, and a controlling method thereof.

According to an aspect of an exemplary embodiment, there is provided a display apparatus including a display configured to display a multi screen, a communicator configured to communicate with a plurality of external input apparatuses of different types, a storage configured to store information about the plurality of external input apparatuses respectively mapped with a plurality of types of content, and a processor configured to, in response to a control signal being received from an external input apparatus, control an operation state of a screen of the multi screen corresponding to the control signal based on information stored in the storage and a type of content being provided by the multi screen.

In response to a control signal being received from a first input apparatus while the multi screen is being displayed, the processor may control an operation state of a first multi screen which provides a type of contents pre-mapped with the first input apparatus based on the received control signal, and in response to a control signal being received from a second input apparatus while the multi screen is being displayed, the processor may control an operation state of a second multi screen which provides a type of contents pre-mapped with the second input apparatus based on the received control signal.

The processor may provide a user interface (UI) screen which is capable of setting an external input apparatus for controlling different types of image content provided through the multi screen, and respectively map and store a plurality of the external input apparatuses with the different types of image content based on information set through the UI screen.

In response to a control signal being received from an external input apparatus mapped with a type of contents not being provided by a current multi screen, the processor may provide a guide UI which guides provision of the corresponding type of contents.

In response to an external input apparatus corresponding to a type of contents being provided on a current multi screen not being connected to the communicator, the processor may automatically communicate with an external input apparatus for controlling the corresponding type of contents.

In response to an external input apparatus corresponding to a type of contents being provided on a current multi screen not being connected to the communicator, the processor may provide a guide UI which guides connection with the corresponding external input apparatus.

In response to a signal according to a preset event generated from an external input apparatus being received in a preset screen mode, the processor may switch to a screen mode for providing a type of contents pre-mapped with the corresponding external input apparatus.

In response to a control signal corresponding to a preset type of content provided on at least one screen of multi screens not being received over a preset period of time while the multi screen is being provided, the processor may cancel a multi screen mode and provide a remaining image on a full screen.

According to an aspect of another exemplary embodiment, there is provided a method of controlling a display apparatus including displaying a multi screen, and, in response to a control signal being received from an external input apparatus from among a plurality of external input apparatuses, controlling an operation state of a screen of the multi screen corresponding to the received control signal based on information about the plurality of external input apparatuses respectively mapped with a plurality of types of content and a type of content being provided by the multi screen.

The controlling an operation state of the screen may include, in response to a control signal being received from a first input apparatus while the multi screen is being displayed, controlling an operation state of a first multi screen which provides a type of content pre-mapped with the first input apparatus based on the received control signal, and, in response to a control signal being received from a second input apparatus while the multi screen is being displayed, controlling an operation state of a second multi screen which provides a type of content pre-mapped with the second input apparatus based on the received control signal.

The controlling may further include providing a UI screen which is capable of setting an external input apparatus for controlling different types of image content provided through the multi screen, and respectively mapping and storing the plurality of external input apparatuses with a screen of the different types of image content based on information set through the UI screen.

The controlling may further include, in response to a control signal being received from an external input apparatus mapped with a type of content not being provided on a current multi screen, providing a guide UI which guides provision of the corresponding type of content.

The controlling may further include, in response to an external input apparatus corresponding to a type of content being provided on a current multi screen not being connected to the communicator, automatically communicating with the external input apparatus for controlling the corresponding type of content.

The controlling may further include, in response to an external input apparatus corresponding to a type of content being provided on a current multi screen not being connected to the communicator, providing a guide UI which guides connection with the corresponding external input apparatus.

The controlling may further include, in response to a signal according to a preset event generated from an external input apparatus being received while in a preset screen mode, switching to a screen mode for providing a pre-mapped type of contents.

The controlling may further include, in response to a control signal corresponding to a preset type of content being provided on a screen of the multi screen not being received over a preset period of time while the multi screen is being provided, canceling a multi screen mode and providing a remaining image on a full screen.

According to one or more of the exemplary embodiments, a plurality of users may respectively control a plurality of screens of a multi screen provided by a single display apparatus. Accordingly, a control function of a display apparatus may be conveniently used by a plurality of users with different input apparatuses.

### BRIEF DESCRIPTION OF THE DRAWINGS

The above and/or other aspects will be more apparent by describing certain exemplary embodiments with reference to the accompanying drawings, in which:
FIG. 1 is a diagram illustrating a display system according to an exemplary embodiment;
FIG. 2A is a block diagram illustrating a configuration of a display apparatus according to an exemplary embodiment;
FIG. 2B is a block diagram illustrating a configuration of a display apparatus according to another exemplary embodiment;
FIG. 3 is a diagram illustrating a variety of software modules stored in a storage according to an exemplary embodiment;
FIG. 4 is a diagram illustrating an example of controlling a display apparatus according to an exemplary embodiment;
FIGS. 5A and 5B are diagrams illustrating examples of providing a UI according to exemplary embodiments;
FIGS. 6 and 7 are diagrams illustrating examples of providing a UI according to other exemplary embodiments; and
FIG. 8 is a flowchart illustrating a method of controlling a display apparatus according to an exemplary embodiment.

### DETAILED DESCRIPTION

The exemplary embodiments may vary, and may be provided in different exemplary embodiments. Specific exemplary embodiments are described herein with reference to accompanying drawings and detailed explanation.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

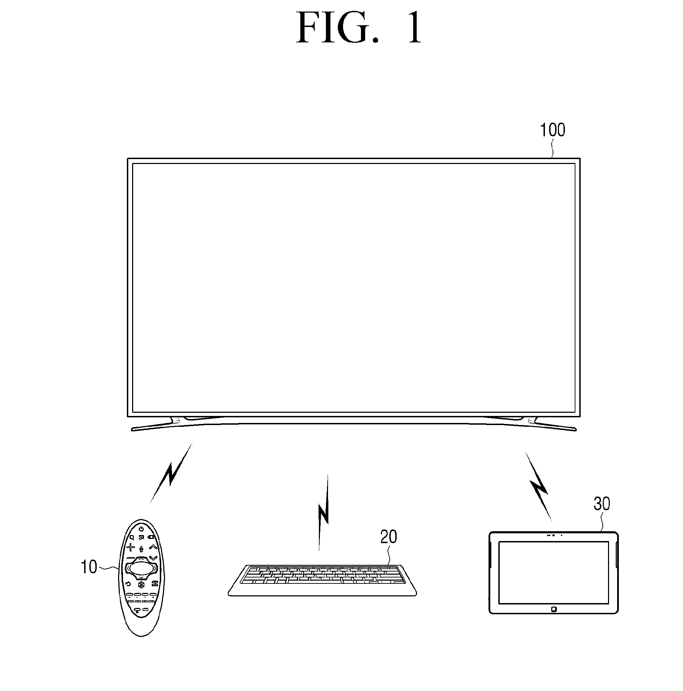

FIG. 1 is a diagram illustrating a display system according to an exemplary embodiment.

As illustrated in FIG. 1, the display system includes a display apparatus 100 and a plurality of input apparatuses 10, 20, and 30.

The display apparatus 100 may be a digital TV, but this is merely for purposes of an example. As another example, the display apparatus 100 may be various apparatuses having a multiscreen display function such as a PC, a navigation system, a tablet, a kiosk, an appliance, and the like, or an apparatus that connects to a display apparatus such as a game console, a set-top box, and the like. Hereinafter, the display apparatus 100 may be described as a digital TV for purposes of convenience.

The display apparatus 100 may be controlled by a user motion, a speech command, a button press, and the like, through input apparatuses 10, 20, and 30 in an example in which the display apparatus 100 is a digital TV. In this case, the input apparatuses 10, 20, and 30 may control the display apparatus 100 by receiving a user command, and transmitting a control signal corresponding to the input user command to the display apparatus 100. For example, the external input apparatuses 10, 20, and 30 may include various forms that detect an input such as a movement, a speech command, a key press, and the like, and may transmit a signal corresponding to the detected input.

As a non-limiting example, the input apparatuses 10, 20, and 30 may include at least one sensor such as an optical joystick (OJ) sensor that includes a motion sensor, a touch sensor or optical technology, a physical button (e.g. a tact switch), display, a microphone to receive speech input or audio input of various forms. Examples of an input apparatus include a remote control, a keyboard, a mouse, a tablet, a pad, a mobile phone, a joystick, a microphone to receive a speech command, an imaging device to receive user motion, a combination thereof, and the like. Also, two or more of the input apparatuses 10, 20, and 30 may be the same type of input apparatuses or they may be different types of input apparatuses.

According to one or more exemplary embodiments, the display apparatus 100 may provide a multi screen, and respectively control the screens of the multi screen according to a control signal received from an input apparatus of different types corresponding to the multi screen. Hereinafter, various examples are described with reference to a block diagram that illustrates configurations of the display apparatus 100.

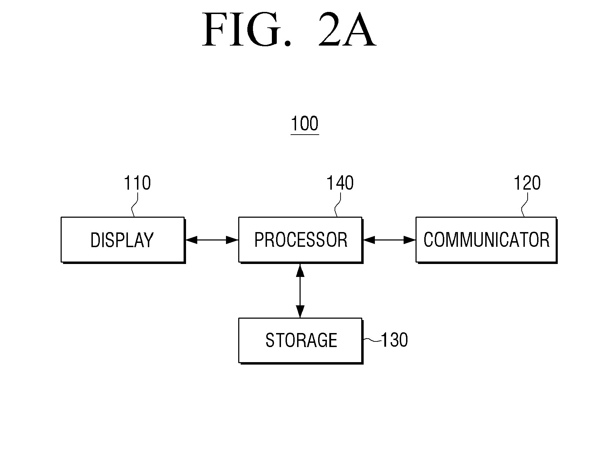

FIG. 2A is a block diagram illustrating a configuration of a display apparatus according to an exemplary embodiment.

Referring to FIG. 2A, the display apparatus 100 includes a display 110, a communicator 120, a storage 130, and a processor 140.

The display 110 displays various images. For example, the images may include a screen or a shot reproducing various contents such as an image, video-on-demand (VOD), text, music, and the like, a screen for executing an application including various contents, a web browser screen, a graphic user interface (GUI) screen, and the like.

As an example, the display 110 may include a liquid crystal display panel (LCD), organic light emitting diodes (OLED), and the like, but is not limited thereto. Also, the display 110 may be implemented as a flexible display, a transparent display, and the like.

According to one or more exemplary embodiments, if a preset event or a predetermined event occurs, the display 110 may provide a multi screen mode according to a control of the processor 140.

The communicator 120 may perform communication with an external apparatus according to various types of communication methods. As an example, the communicator 120 may perform wireless and/or wired communication with external apparatuses 10, 20, and 30 illustrated in FIG. 1. Here, the communicator 120 may perform communication with the external input apparatuses 10, 20, and 30 or an external server (not shown) through various wired/wireless communication methods such as a RF (Radio Frequency) method, for example, a BT (BlueTooth), a WI-FI (Wireless Fidelity), and Zigbee, or an IR (Infrared), a Serial Interface, a USB (Universal Serial Bus), and the like.

For example, if a preset event occurs, the communicator 120 may perform communication according to a communication method predefined with the external input apparatuses 10, 20, and 30, to be in a linked state. In this example, the link may refer to the states in which communication is enabled such as initializing communication between the display apparatus 100 and the external input apparatuses 10, 20, and 30, forming a network, performing pairing of apparatuses, and the like. In an example in which communication is performed based on an RF method, the communicator 120 may provide apparatus identification information about the external input apparatuses 10, 20, and 30 to the display apparatus 100, and provide apparatus identification information of the display apparatus 100 to the input apparatuses 10, 20, and 30, thereby perform pairing of both apparatuses. For example, if a preset event occurs in the display apparatus 100, the communicator 100 may search peripheral apparatuses using a DLNA (Digital Living Network Alliance) technology, and perform pairing with the searched apparatus while in a linked state.

In this example, the preset event may occur in the display apparatus 100 and/or in at least one of the external input apparatuses 10, 20, and 30. For example, the preset event may include a user command of selecting the display apparatus 100 as a controlled apparatus being input from one of the external input apparatuses 10, 20, and 30, or at least one of the display apparatus 100 and the external input apparatuses 10, 20, 30 being turned on. According to an exemplary embodiment, the display apparatus 100 and the external input apparatuses 10, 20, and 30 may be linked following an event in which a screen providing a type of image pre-mapped with the external input apparatuses 10, 20, and 30 is displayed.

Also, when the external input apparatus is connected to the communicator 120 with a wire, the external input apparatus may transmit apparatus information to the display apparatus 100 to determine which input apparatus the display apparatus 100 is connected to.

The storage 130 may be used to store various data such as an O/S (operating system) software module, various multimedia contents, various applications, various contents input or set during execution of applications, and the like.

For example, the storage 130 may store information about the external input apparatuses 10, 20, and 30 respectively mapped with a plurality of types of contents. Here, the plurality of types of contents may be in various forms including a screen for broadcasting, a screen for Internet, a screen for games, a screen for reproducing VODs, a screen for a user interface (UI) menu, and the like. Hereinafter, a screen for broadcasting and a screen for the Internet are described as examples.

The processor 140 controls the overall operations of the display apparatus 100. For example, the processor 140 may generate a multi screen according to a preset event and provide the multi screen on a single display panel or seamless display panel. Here, the multi screen indicates a screen provided by dividing a screen provided on a display panel into a plurality of screens or areas. For example, the multi screen mode may be entered according to a user command, and the processor 140 may generate a multi screen that provides a selected plurality of contents on each of the multi screens. It should be appreciated that the multi screen may be provided according to various events including an event in which a plurality of contents are simultaneously selected, an event in which a plurality of contents are simultaneously displayed or otherwise provided by an external server, and the like.

In the multi screen mode, the processor 140 may control the display apparatus 100 to be connected to an external input apparatus of different types. In this example, if a control signal is received from at least one of the external input apparatuses, the processor 140 may control the operation state of screens respectively corresponding to the control signal based on information stored in the storage 130 and a type of contents provided by the multi screen. In the example of FIG. 1, the external input apparatuses 10, 20, and 30 are implemented as a user terminal 30 having a remote processor 10, a keyboard 20, and the user terminal 30 having a remote control function as shown in FIG. 1. As another example, the external input apparatuses may include a mouse (not shown), a pointing device (not shown), and the like. As another example, a signal for controlling at least one of the multi screens may be input by a user motion, a vocal command, and the like. Hereinafter, an example of a control signal being received from the external input apparatuses 10, 20, and 30 is described.

For example, if a control signal is received from a first input apparatus while a multi screen is being provided, the processor 140 may control an operation state of a first screen of the multi screen that provides a type of contents pre-mapped with the first input apparatus based on the received control signal. As another example, if a control signal is received from a second input apparatus while a multi screen is being displayed, the processor 140 may control an operation state of a second screen of the multi screen which provides a type of contents pre-mapped with the second input apparatus based on the received control signal.

According to one or more exemplary embodiments, the processor 140 may provide a UI screen to allow a user to set an external input apparatus for controlling an image of different types provided through the multi screen. The processor 140 may map each of a plurality of the external input apparatuses with an image of different types based on information set through the UI screen, and the mapped information may be stored, for example, in the storage 130.

If a control signal is received from an external input apparatus that is mapped with a type of contents that is not provided by a current multi screen, the processor 140 may provide a guide UI which guides provision of the corresponding type of contents. For example, if a control signal is received from a keyboard mapped with an Internet screen while the Internet screen is not provided on the multi screen, the processor 140 may provide a guide UI which inquires or asks a user whether to provide the Internet screen.

If an external input apparatus corresponding to a type of contents provided on a current multi screen is not connected to the communicator 120, the processor 140 may automatically attempt to communicate with the external input apparatus for controlling the corresponding type of contents. For example, if a keyboard is mapped with an Internet screen from among the multi screens, and the keyboard is not connected to the communicator 120 while the Internet screen is provided on the multi screen, the processor 140 may automatically perform communication with a paired keyboard. As another example, if the display apparatus 100 is not paired with the external input apparatus for controlling the corresponding type of contents, the processor 140 may display a UI asking whether a user would like to perform pairing.

As another example, if an external input apparatus corresponding to a type of contents provided on the current multi screen is not connected to the communicator 120, the processor 140 may provide a guide UI which guides the corresponding content. For example, if a keyboard is mapped with an Internet screen and is not connected to the communicator 120 while the Internet screen is provided as one of the screens on the multi screen, the processor 140 may provide a guide UI which inquires if the display apparatus 100 is connected to the keyboard.

If a control signal corresponding to a preset type of contents for at least one screen of the multi screens is not received for a preset period of time while a multi screen is being provided, the processor 140 may cancel a multi screen mode and provide a remaining image on a full screen. That is, the processor 140 may transition the display apparatus 100 from multi screen mode to full screen mode, and the like. For example, if the control signal corresponding to the Internet screen is not received within a preset period of time while a multi screen including a screen providing a broadcast content and a screen providing the Internet screen is being displayed, the processor 140 may cancel the multi screen mode and provide the broadcast content on a full screen.

If a signal according to a preset event is generated from an external input apparatus and is received in a preset screen mode, the processor 140 may switch to a screen mode for providing a type of contents pre-mapped with the corresponding external input apparatus. For example, if a signal is received from an external input apparatus according to a preset event, the processor 140 may switch to a mode for providing a screen for the content corresponding to the external input apparatus which transmitted the signal. As another example, if a signal is received from a remote processor according to a preset event (for example, the remote's movement signal, a key input signal, etc.), the processor 140 may switch to a TV viewing mode for providing a broadcast screen (for example, an initial TV viewing mode), and if a signal is received from the keyboard according to the preset event (for example, a power on signal, a key input signal, etc.), the processor 140 may switch to the Internet mode for providing the Internet screen (for example, an initial Internet mode).

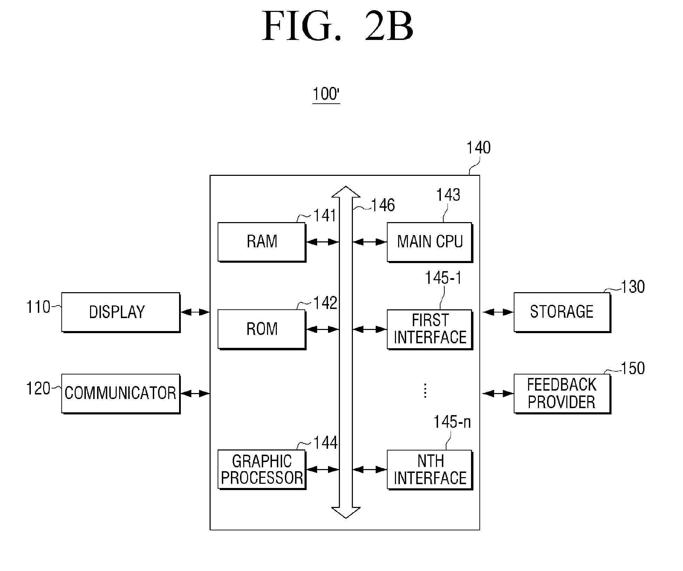

FIG. 2B is a block diagram illustrating a configuration of a display apparatus 100' according to another exemplary embodiment. Referring to FIG. 2B, display apparatus 100' includes the display 110, the processor 120, the communicator 130, the processor 140, and a feedback provider 150. For brevity, redundant descriptions of the elements illustrated in FIG. 2B which overlap with those illustrated in FIG. 2A might be omitted.

The processor 140 controls the overall operations of the display apparatus 100' using various programs stored in the storage 130. In this example, the processor 140 includes a RAM 141, a ROM 142, a main CPU 143, a graphic processor 144, a first to an nth interfaces 145-1∼145-n, and a bus 146. The RAM 141, the ROM 142, the main CPU 143, the graphic processor 144, and the first to the nth interface 145-1∼145-n, and other elements, may be interconnected through the bus 146. The first to the nth interface 145-1∼145-n may be connected to the above-described various elements. As an example one or more of the above interfaces may be a network interface which may connect to an external apparatus via a network.

The main CPU 143 accesses the storage 130, and may perform booting using the O/S stored in the storage 140. The main CPU 143 performs various operations using various programs, contents, data, etc. stored in the storage 130. For example, the main CPU 143 may process a plurality of data displayed on a multi screen for each screen according to an exemplary embodiment.

The ROM 142 stores a set of commands for system booting. For example, if a turn-on command is input, and thus, power is supplied, the main CPU 143 may copy the O/S stored in the storage 130 in the RAM 141 according to a command stored in the ROM 142, and boot a system by executing the O/S. When the booting is completed, the main CPU 143 may copy various application programs stored in the storage 130 in the RAM 141, and execute the application programs copied in the RAM 141 to perform various operations.

The graphic processor 144 generates a screen that may include various objects such as an icon, an image, a text, etc. using a computing unit (not shown) and a rendering unit (not shown). The computing unit may compute property values such as coordinates, a shape, a size, a color, and the like of each object to be displayed according to the layout of the screen using a control command received. The rendering unit may generate a screen with various layouts including objects that are based on the property values computed by the computing unit. The screen generated by the rendering unit (not shown) may be displayed in a display area of the display 110.

Similar to the storage 130 in FIG. 2A, the storage 130 may store various data such as O/S (operating system) software modules to drive the display apparatus 100, various multimedia contents, various applications, various contents input or set during execution of applications, and the like. In particular, as mentioned above, the storage 130 may store information about external input apparatus and the different types of contents or screen modes which the input apparatuses are mapped to, and/or an external control signal.

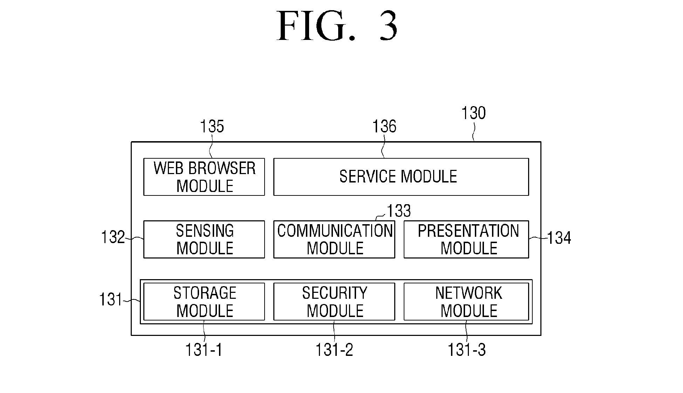

In addition to the above, examples of various software modules that may be stored in the storage 130 are described with reference to FIG. 3.

According to FIG. 3, the storage 130 may store software modules, for example, a base module 131, a sensing module 132, a communication module 133, a presentation module 134, a web browser module 135, and a service module 136.

In this example, the base module 131 refers to a basic module which may process a signal that is transferred from each hardware included in the display apparatus 100', and transmit the processed signal to an upper layer module. Here, the base module 131 includes a storage module 131-1, a security module 131-2, a network module 131-3, and may include other modules. The storage module 131-1 is a program module that may control a storage such as a database (DB) or a registry. The main CPU 133 may access the database within the storage 130 using the storage module 131-1, and obtain various data. The security module 131-2 is a program module to support certification of hardware, request permission, secure storage, etc. The network module 131-3 is a module to support a network connection, which includes a DNET module, a UPnP module, etc.

The sensing module 132 may collect information from various sensors, and analyze and control the collected information. For example, the sensing module 132 may include a head-direction recognition module, a face recognition module, a voice recognition module, a motion recognition module, a NFC recognition module, and the like.

The communication module 133 may perform communication with apparatuses and devices disposed outside of the display apparatus. The communication module 133 may include a device module used in communication with an external apparatus, a messaging module such as a messenger program, SMS (Short Message Service) and MMS (Multimedia Message Service) programs, an e-mail program, etc., and a call module including a Call Info Aggregator program module, a VoIP module, etc.

The presentation module 134 may configure a display screen. For example, the presentation module 134 may include a multimedia module for reproducing and outputting multimedia content, and a UI rendering module to perform a UI and graphic processing.

The web browser module 135 performs web browsing to access a web server. For example, the web browser module 135 may include various modules such as a web view module configuring a web page, a download agent module performing downloads, a bookmark module, a Webkit module, etc.

The service module 136 is a module including various applications to provide a variety of services. For example, the service module 136 may include various program modules such as a social networking service (SNS) program, a content reproducing program, a game program, an E-book program, a calendar program, an alarm management program, other widgets, etc.

The feedback provider 150 provides various feedbacks in the multi screen mode. For example, the feedback provider 150 may provide feedback in sound form, visual form, and the like, in addition to the above-described various types of guide UIs.

Although not shown, the display apparatus 100' may further include an audio processing unit to perform processing of audio data, a video processing unit to perform processing of video data, a speaker to output not only various audio data processed in the audio processing unit, but also various alarm sounds, voice messages, etc. The display apparatus 100' may also include a microphone (not shown) to receive audio input such as a user voice, an instrument such as a guitar sound, and the like, and convert the sounds to audio data, etc.

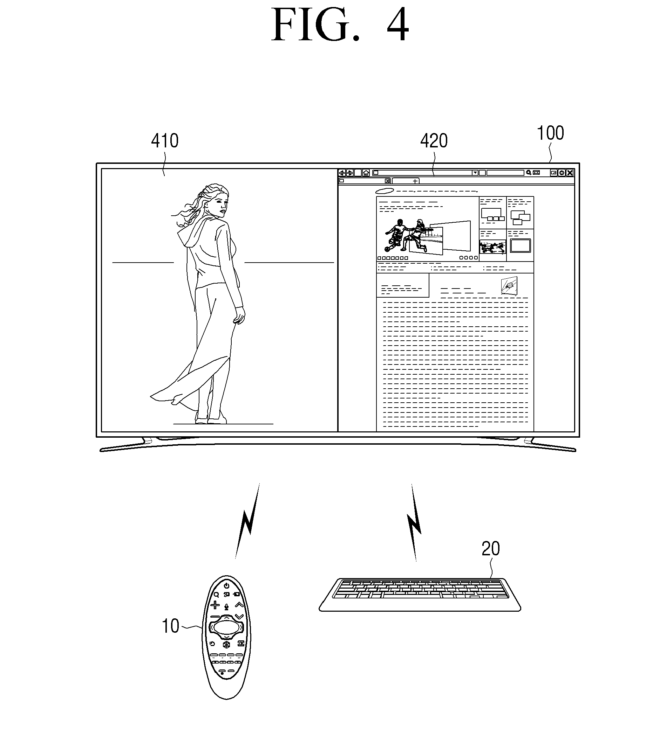

FIG. 4 is a diagram illustrating an example of controlling a display apparatus according to an exemplary embodiment.

As illustrated in FIG. 4, the display apparatus 100 may provide a multi screen including screens 410 and 420 according to a preset event. According to one or more exemplary embodiments, the display apparatus 100 may be pre-mapped with an external input apparatus corresponding to a type of content of each screen. For example, the broadcasting screen may be mapped with a remote processor as the external input apparatus, and the Internet screen may be mapped to a keyboard as the external input apparatus.

As described above, if a control signal is received from a remote processor 10 that is already pre-mapped with a broadcasting screen, the display apparatus 100 may control an operation state of the screen 410 that is providing a broadcasting screen based on the received control signal. As another example, if a control signal is received from the keyboard 20 that is pre-mapped with an Internet screen, the display apparatus 100 may control an operation state of the screen 420 at which the Internet screen is provided based on the received control signal.

Accordingly, a plurality of users may respectively control a multi screen provided by a single display apparatus based on an external input device being pre-mapped to a particular type of content displayed on a screen of the multi screen, and thus the user convenience may be improved.

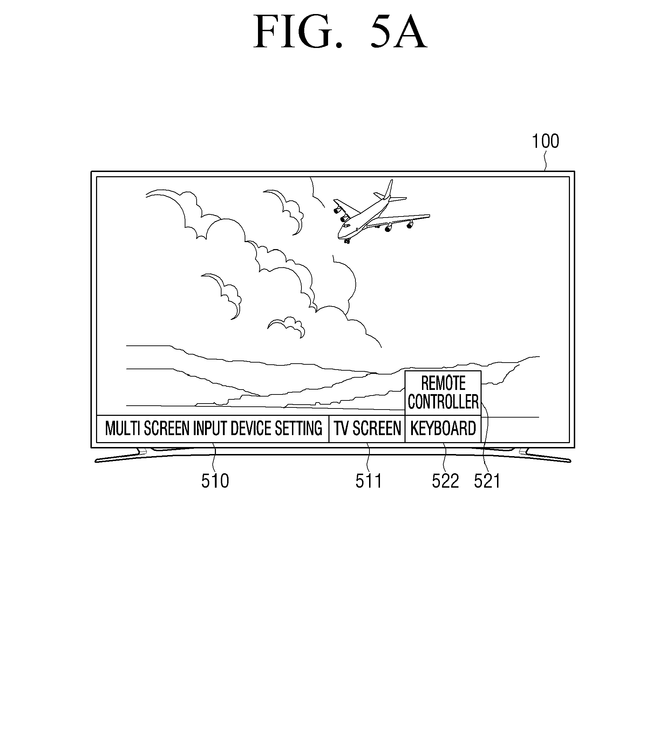

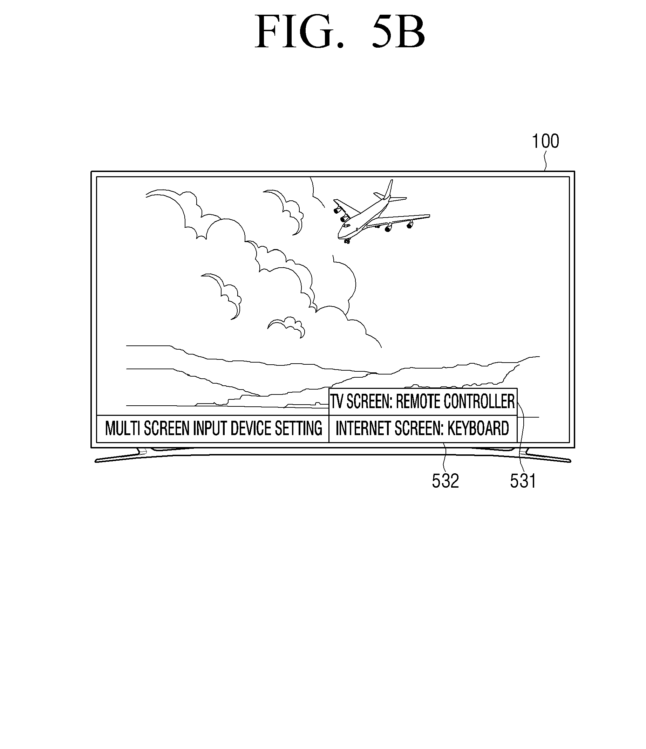

FIGS. 5A and 5B are diagrams illustrating examples of providing a UI according to exemplary embodiments.

As illustrated in FIGS. 5A and 5B, the display apparatus 100 may provide a UI screen 510 to set an input apparatus to control each type of content that is provided on a multi screen.

As illustrated in FIG. 5A, the display apparatus 100 may provide information on a type of content, for example, a TV screen 511, and provide information of the input apparatuses 521 and 522, to enable a user to set an input apparatus for the TV screen.

Subsequently, the display apparatus 100 may provide a UI to set an input apparatus for other types of contents, and, as illustrated in FIG. 5B, enable a user to set a controllable input apparatus for each type of content which may be provided through the multi screen.

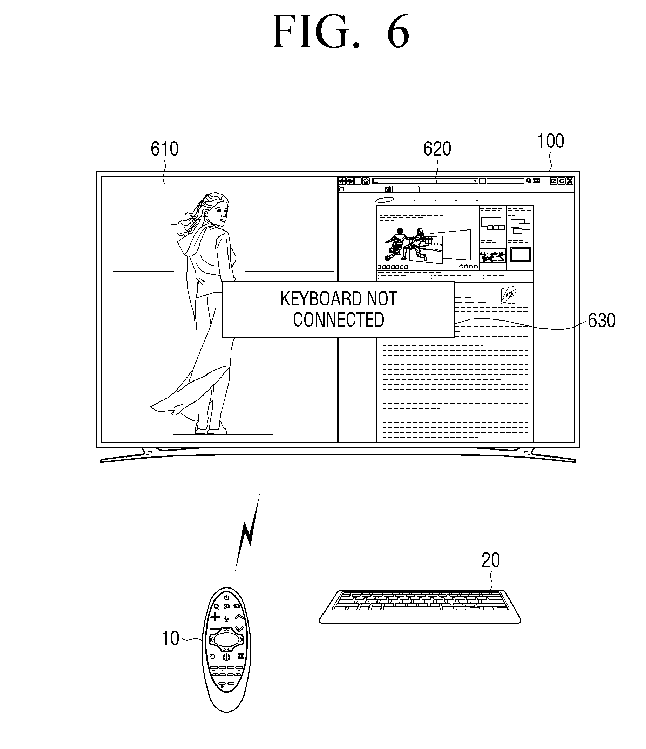

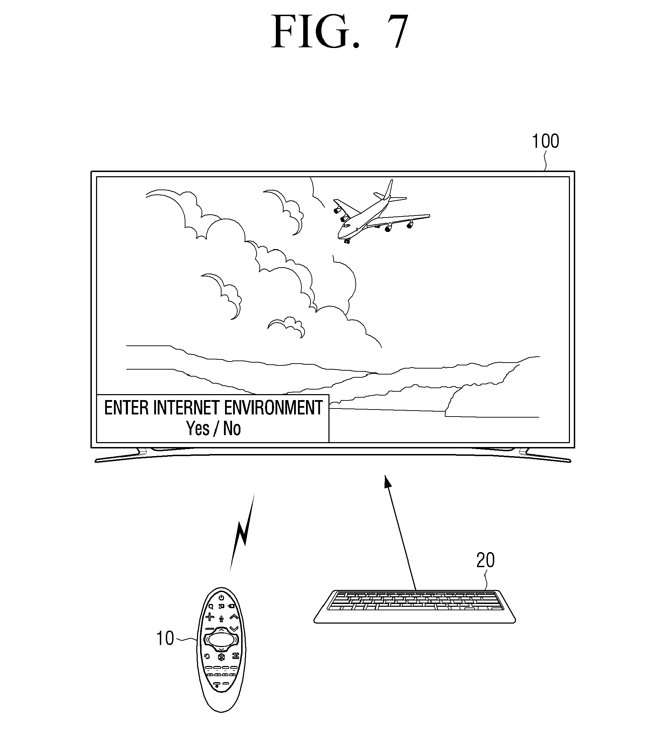

FIGS. 6 and 7 are diagrams illustrating examples of providing a UI according to other exemplary embodiments.

For example, if an external input apparatus corresponding to a type of content provided on a current multi screen is not connected to the display apparatus 100, the display apparatus 100 may provide a guide UI which guides the corresponding content. As illustrated in the example of FIG. 6, the display apparatus 100 may respectively provide a TV screen 610 and an Internet screen 620 on a current multi screen. In this example, if the keyboard 20 is mapped with the Internet screen 620 and is not connected to the display apparatus 100, the display apparatus 100 may provide a guide UI 630 to guide the corresponding content.

As another example, if a control signal is received from an external input apparatus that is mapped with a type of image not provided on the current multi screen, the display apparatus 100 may provide a guide UI to provide the corresponding type of image. As illustrated in the example of FIG. 7, if a control signal is received from the keyboard 20 mapped with an Internet screen while the Internet screen is not provided, the display apparatus 100 may provide a guide UI 710 to inquire provision of the Internet screen.

As another example, if a control signal is received from an external input apparatus mapped with a type of image that is not provided on a current screen, the display apparatus 100 may additionally display a screen to automatically provide the corresponding type of image. As yet another example, the display apparatus 100 may replace a formerly displayed image with an image of a corresponding type, and display the image of the corresponding type.

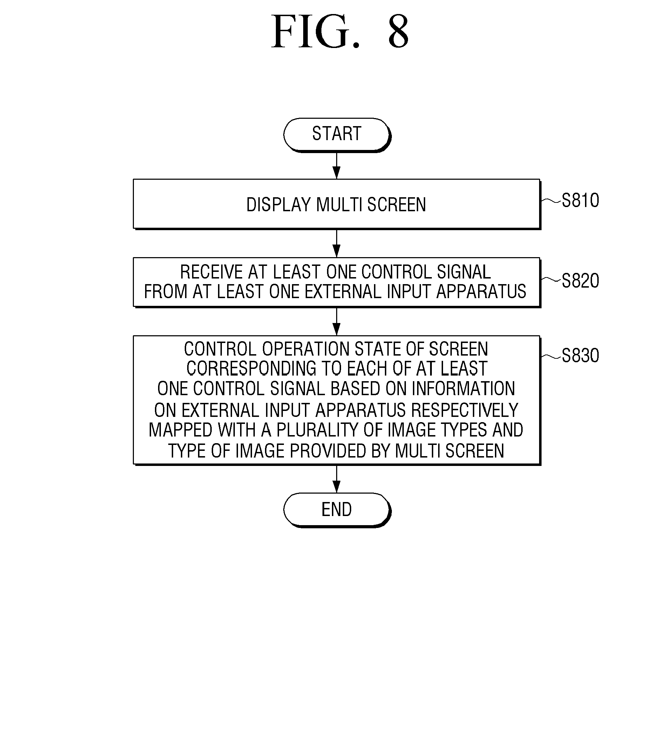

FIG. 8 is a flowchart illustrating a method of controlling a display apparatus according to an exemplary embodiment.

Referring to FIG. 8, the display apparatus 100 first displays a multi screen (S810). Subsequently, if at least one control signal is received from at least one external input apparatus, the display apparatus 100 controls an operation state of a screen corresponding to the received at least one control signal based on information about external input apparatuses respectively mapped with a plurality of types of contents, and a type of contents provided on the multi screen (S820).

For example, to control an operation state of the screen in S820, if a control signal is received from a first input apparatus while a multi screen is being provided, the display apparatus 100 may control the operation state of a first multi screen providing a type of contents pre-mapped with the first input apparatus based on the received control signal. As another example, if a control signal is received from a second input apparatus while the multi screen is being displayed, the display apparatus 100 may provide the operation state of a second multi screen providing a type of contents pre-mapped with the second input apparatus.

The method may further include providing a UI screen which is capable of setting an external input apparatus for controlling an image of different types that may be provided through a multi screen, and mapping and storing each of a plurality of external input apparatuses with the image of different types based on information set through the UI screen.

If a control signal is received from an external input apparatus that is mapped with a type of contents that are not being provided on a current multi screen, the method may further include providing a guide UI which guides provision of the corresponding type of contents.

If an external input apparatus corresponding to a type of contents provided on a current multi screen is not connected to the communicator, the method may further include automatically communicating with an external input apparatus for controlling the corresponding type of contents.

If an external input apparatus corresponding to a type of contents provided on a current multi screen is not connected to the communicator, the method may further include providing a guide UI which guides connection with the corresponding external input apparatus.

If a signal according to a preset event generated from an external input apparatus is received during a preset screen mode, the method may further include switching to a screen mode for providing a type of contents that is pre-mapped with the corresponding external input apparatus.

If a control signal corresponding to a preset type of contents provided on at least one screen of multi screens is not received over a preset period of time while a multi screen is being provided, the method may further include canceling or stopping a multi screen mode and providing a remaining image on a full screen.

According to one or more exemplary embodiments, a plurality of users may respectively control a plurality of screens included within a multi screen provided by a single display apparatus, and thus, the user convenience may be improved. In addition, a mode of a display apparatus may be automatically changed according to an input apparatus a user desires to use, and thus, the user convenience may be improved.

Meanwhile, the above-described method of a display apparatus according to various exemplary embodiments may be implemented as a program code that is executable by a computer, and may be provided to each apparatus to be executed by a processor as stored in various non-transitory computer readable mediums.

For example, a non-transitory computer readable medium may store a program for controlling an operation state of screens respectively corresponding to at least one control signal, based on information about external input apparatuses respectively mapped with a plurality of types of contents, and a type of contents provided by the multi screen.

The non-transitory computer readable medium refers to a medium which may store data permanently or semi-permanently rather than storing data for a short time such as a register, a cache, and a memory and may be readable by an apparatus. Specifically, the above-mentioned various applications or programs may be stored and provided in a non-transitory computer readable medium such as CD, DVD, hard disk, Blu-ray disc, USB, memory card, ROM, and the like.

The foregoing embodiments and advantages are merely exemplary and are not to be construed as limiting the present invention. The present teaching may be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

## Claims

1. A display apparatus comprising:
a display configured to display a multi screen;
a communicator configured to communicate with a plurality of external input apparatuses of different types;
a storage configured to store information about the plurality of external input apparatuses respectively mapped with a plurality of types of content; and
a processor configured to, in response to receiving a control signal from an external input apparatus, control an operation state of a screen of the multi screen corresponding to the received control signal, based on information stored in the storage and a type of content being provided by the multi screen.

2. The display apparatus as claimed in claim 1, wherein, in response to a control signal being received from a first input apparatus while the multi screen is being displayed, the processor is configured to control an operation state of a first multi screen which provides a type of content that is pre-mapped with the first external input apparatus based on the received control signal, and, in response to a control signal being received from a second input apparatus while the multi screen is being displayed, the processor is configured to control an operation state of a second multi screen which provides a type of content pre-mapped with the second external input apparatus based on the received control signal.

3. The display apparatus as claimed in claim 1 or 2, wherein the processor is configured to provide a user interface (UI) screen capable of setting an external input apparatus for controlling different types of image content provided through the multi screen, and respectively maps and stores a plurality of the external input apparatuses with the different types of image content based on information set through the UI screen.

4. The display apparatus as claimed in anyone of claim 1 to 3, wherein, in response to a control signal being received from an external input apparatus mapped with a type of content not being provided by a current multi screen, the processor is configured to provide a guide UI which guides provision of the corresponding type of content.

5. The display apparatus as claimed in anyone of claim 1 to 4, wherein, in response to an external input apparatus corresponding to a type of content being provided on a current multi screen not being connected to the communicator, the processor is configured to automatically communicate with the external input apparatus for controlling the corresponding type of content being provided on the current multi screen.

6. The display apparatus as claimed in anyone of claim 1 to 5, wherein, in response to an external input apparatus corresponding to a type of content being provided on a current multi screen not being connected to the communicator, the processor is configured to provide a guide UI which guides connection with the corresponding external input apparatus.

7. The display apparatus as claimed in anyone of claim 1 to 6, wherein, in response to a signal according to a preset event generated from an external input apparatus being received while in a preset screen mode, the processor is configured to switch to a screen mode for providing a type of content pre-mapped with the corresponding external input apparatus.

8. The display apparatus as claimed in claim 7, wherein, in response to a control signal corresponding to a preset type of content being provided on at least one screen of the multi screen not being received over a preset period of time while the multi screen is being provided, the processor is configured to cancel a multi screen mode and provide a remaining image on a full screen.

9. A method of controlling a display apparatus, the method comprising:
displaying a multi screen; and
in response to a control signal being received from an external input apparatus from among a plurality of external input apparatuses, controlling an operation state of a screen of the multi screen corresponding to the received control signal, based on information about the plurality of external input apparatuses respectively mapped with a plurality of types of content and a type of content being provided by the multi screen.

10. The method as claimed in claim 9, wherein the controlling an operation state of the screen comprises, in response to a control signal being received from a first input apparatus while the multi screen is being displayed, controlling an operation state of a first multi screen which provides a type of content pre-mapped with the first input apparatus based on the received control signal, and, in response to a control signal being received from a second input apparatus while the multi screen is being displayed, controlling an operation state of a second multi screen which provides a type of content pre-mapped with the second input apparatus based on the received control signal.

11. The method as claimed in claim 9 or 10, further comprising:
providing a user interface (UI) screen which is capable of setting an external input apparatus for controlling different types of image content provided through the multi screen; and
respectively mapping and storing the plurality of external input apparatuses with a screen of the different types of image content based on information set through the UI screen.

12. The method as claimed in anyone of claim 9 to 10, further comprising:
in response to a control signal being received from an external input apparatus mapped with a type of content not being provided on a current multi screen, providing a guide UI which guides provision of the corresponding type of content.

13. The method as claimed in anyone of claim 9 to 12, further comprising:
in response to an external input apparatus corresponding to a type of content being provided on a current multi screen not being connected to the communicator, automatically communicating with the external input apparatus for controlling the corresponding type of content.

14. The method as claimed in anyone of claim 9 to 13, further comprising:
in response to an external input apparatus corresponding to a type of content being provided on a current multi screen not being connected to the communicator, providing a guide UI which guides connection with the corresponding external input apparatus.

15. The method as claimed in anyone of claim 9 to 14, further comprising:
in response to a signal according to a preset event generated from an external input apparatus being received while in a preset screen mode, switching to a screen mode for providing a pre-mapped type of content.
